# FASCICULE DE BREVET EUROPEEN

(11) **EP 1 500 444 B1**
(45) Date de publication et mention de la délivrance du brevet: **09.08.2006**
(21) Numéro de dépôt: 04291602.3
(22) Date de dépôt: 25.06.2004
(51) Int. Cl.: B21K 5/20, B23P 15/24, G05B 19/4099

(54) **Procédé de fabrication de pièces par forgeage de précision**
Verfahren zur Herstellung von Schmiedestücken bei Präzisions-Schmieden
Process for the manufacture of forgings by precision forging

(30) Priorité: 23.07.2003 FR 0309000
(43) Date de publication de la demande: 26.01.2005
(73) Titulaire: SNECMA, 75015 Paris (FR)
(72) Inventeur: Beignon, Maurice, 95220 Herblay (FR); Cougnaud, Camille, 95220 Santeuil (FR); Lepetit, Marc, 95110 Sannois (FR); Bouillot, Bertrand, 75019 Paris (FR); Valery, Lionel, 95150 Taverny (FR); Plazanet, Jean-Claude, 95100 Argenteuil (FR)
(74) Mandataire: David, Daniel

(56) Documents cités:
- DE-A- 3 708 848
- GB-A- 726 909
- US-A- 2 959 843
- US-A- 4 977 512

## Description

La présente invention concerne le domaine du forgeage de précision de pièces métalliques et en particulier de pièces de forme complexe et gauche, telles que des aubes de turbomachines de grande dimension.

Pour la fabrication de pièces métalliques, on met en oeuvre préférentiellement des techniques de forgeage quand elles doivent absorber des efforts importants en service. C'est le cas pour des aubes de compresseur ou de soufflantes de turboréacteur pour lesquels les efforts internes sont engendrés notamment par les vibrations et les forces centrifuges auxquelles elles sont soumises.

Le forgeage consiste à déformer plastiquement un bloc de métal sous l'effet de chocs ou par l'application d'une pression. On procède généralement par étapes en formant des ébauches successives qui se rapprochent progressivement de la pièce finie. Le cas échéant, on achève le forgeage de la pièce par une phase de calibrage conduisant à des formes plus précises.

Pour des aubes de compresseur, par exemple en titane, un mode opératoire comprend des étapes de refoulage, de filage et de matriçage en partant de barres.

Avant la phase de refoulage, on prépare les barres de métal en leur faisant subir une opération d'émaillage. Il s'agit d'un revêtement à base de verre qui a pour rôle de faciliter l'écoulement de la matière dans l'outillage. Il sert aussi d'isolant thermique en maintenant la température lors du transfert du four à la presse et en empêchant les chocs thermiques au moment où la pièce vient au contact de l'outillage. Il a aussi pour fonction de protéger la pièce contre l'oxydation. Selon un mode préféré, on applique le revêtement par pulvérisation électrostatique sur les pièces avant leur enfournement.

Parallèlement on lubrifie la surface intérieure des deux coquilles ou outils de refoulage. On procède à l'étape de refoulage en poussant l'extrémité de la barre, portée à une température assurant une bonne plasticité, au moyen d'un poinçon en direction de l'intérieur de la cavité formée par les deux coquilles. Lorsque la forme de la pièce l'impose, on procède au refoulage en plusieurs étapes successives dans des outils adaptés. Par exemple on peut procéder ainsi pour former le pied des aubes de compresseur ainsi que, le cas échéant, les nageoires.

Entre chaque étape de refoulage, on doit éliminer le revêtement d'émail qui a travaillé et la calamine générée par des bains appropriés puis reconstruire une nouvelle couche d'émail.

Selon le type de pièce, pour les aubes de compresseur par exemple et non les aubes de soufflante, on procède avant le refoulage à une étape de filage. Cette étape consiste à étirer le lopin de métal à travers une filière dont le profil correspond à celui qui est à réaliser.

Une fois les pièces ainsi ébauchées, on procède à leur mise en forme par forgeage à l'aide de matrices.

Cette opération de forgeage mécanique consiste à élaborer une pièce en obligeant une ébauche de celle-ci à remplir par choc ou par pression, une empreinte gravée dans une matrice correspondant à la forme de la pièce à obtenir. Dans le cas du titane, sa contrainte d'écoulement dépendant fortement de la température, le forgeage s'effectue à chaud jusqu'à une certaine limite imposée par l'évolution structurale du matériau qui en altère les propriétés mécaniques.

Pour une aube de compresseur ou de soufflante, une opération connue de mise en forme englobe deux opérations de matriçage :
Un matriçage de préfinition qui préforme le pied, et la nageoire le cas échéant, et commence à écraser la pale en faisant passer la barre de la forme ronde à une forme aplatie.
Un matriçage de finition qui achève le cycle de forgeage avec déplacement de matière et emmène la pièce au plus près de sa forme géométrique finale avant usinage.

Les opérations de matriçage sont effectuées sur des presses hydrauliques ou à vis dont les matrices sont préchauffées. Dans ces conditions, le temps de forgeage est relativement court pour éviter un refroidissement trop rapide de la pièce et un échauffement trop élevé de la matrice par conduction thermique entre la pièce et elle-même dans la mesure où la température de l'outillage est différente de celle de la pièce. Par ailleurs, en raison du niveau élevé des contraintes qu'elle subit par le contact avec la pièce, on dépose un lubrifiant sur la gravure de la matrice pour ralentir le refroidissement de la pièce, pour faciliter l'écoulement de la matière et pour réduire les efforts de forgeage.

Une fois la pièce forgée, on procède à sa mise à la cote par usinage et polissage. Cette opération est rendue nécessaire en raison de la surépaisseur subsistant après forgeage. En fait, la gravure de la matrice est déterminée de manière à ménager une surépaisseur sur la pièce. Après forgeage, l'usinage et le polissage permettent de donner à la pièce finie la forme précise et l'état de surface souhaités.

Pour les pièces en titane notamment le polissage est une opération importante. Elle a pour but d'éliminer les défauts résultant de l'opération de forgeage et qui sont susceptibles de constituer des amorces de criques.

La présente invention concerne en premier lieu, la mise au point des outillages qui sont les matrices et les coquilles présentées ci-dessus. Il existe en effet un besoin d'améliorer ces opérations qui ont une contribution négative à l'économie globale de cette techniques.

Le document DE-A-37 08 848 montre un procédé de réalisation d'un outilage.

De même, le temps de réalisation de l'outillage selon la méthode habituelle, est assez long car on doit procéder par retouches successives.

En effet, l'empreinte de la matrice n'a pas rigoureusement la forme et les dimensions de la pièce brute de forge à obtenir. Elle s'en écarte par des « termes correctifs » qui compensent les déformations élasto-plastiques des outillages durant le forgeage. On ne sait pas exactement prévoir ces termes correctifs, et il est donc nécessaire de retoucher la matrice suite aux mesures effectuées sur les pièces d'essais obtenues. En forgeage dit « de précision », les surépaisseurs sont faibles, par exemple 0,8 mm, afin que la pièce finie puisse être obtenue par un polissage à la bande abrasive de la pièce brute ou, le cas échéant notamment lorsqu'elle est en titane, par la combinaison d'un usinage chimique et d'un polissage par bande abrasive. C'est le cas par exemple de la pale des aubes.

La mise au point d'une matrice de forge de précision est par conséquent longue et coûteuse, car elle nécessite de nombreuses retouches séparées par des essais de forgeage de pièces.

Les retouches ne peuvent être effectuées rapidement car elles requièrent des essais de forgeage avec chaque fois le chauffage et le montage de l'outillage sur presse, la réalisation de quelques pièces, le calibrage et le contrôle de ces pièces. Par ailleurs les pièces d'essai ne sont généralement pas exploitables ; elles sont majoritairement destinées au rebut. Pendant le temps des essais et des retouches, on note que les moyens : presse, convoyage des matrices, appareils de contrôle, sont indisponibles pour la production.

On doit noter également que, selon cette méthode conventionnelle, il est pratiquement impossible d'obtenir deux outillages, matrices ou coquilles, identiques.

Ce manque de précision dans la définition des outillages se traduit par un manque de régularité dans les produits fabriqués au moyen de ces outillages.

Lorsque la matrice est mise au point, c'est-à-dire lorsque les pièces d'essais brutes de forge obtenues ont la forme et les dimensions recherchées, cette matrice peut être mise en exploitation pour fabriquer des pièces de série. La matrice se dégrade progressivement en exploitation, et il devient nécessaire, par exemple au bout de 1000 à 5000 pièces selon le cas, de restaurer la matrice ou d'en utiliser une autre.

La restauration d'une matrice dégradée consiste, selon une première méthode, à recharger les zones où de la matière a été arrachée et à usiner et polir une nouvelle empreinte. Selon une seconde méthode, on reconstitue par usinage l'empreinte entièrement après avoir éliminé la couche nitrurée et enlevé une épaisseur de quelques mm de matière. On désigne cette technique par le terme de relavage. La restauration d'une matrice ou la fabrication d'une nouvelle matrice nécessitent les mêmes mises au point que la matrice initiale. Elles sont donc également longues et coûteuses.

La finition par polissage à la bande abrasive sur une machine de type à cinq ou six axes est bien adaptée aux pièces de forme complexes telles les pales des aubes. Au contraire d'un usinage, par exemple par fraisage, la finition à la bande abrasive enlève, à chaque passe, une épaisseur de matière préétablie, cette épaisseur augmentant avec la vitesse de la bande abrasive et la pression exercée par la bande sur la pièce, cette épaisseur diminuant avec la vitesse de déplacement de la bande par rapport à la pièce. La forme et les dimensions de la pièce après une passe à la bande abrasive sont donc directement fonction de la forme et des dimensions de la pièce avant cette passe.

Ceci ne pose pas de problème avec les premières pièces issues de la matrice, car elles sont toutes identiques. Cependant au fur et à mesure du forgeage, on note une dégradation de la matrice (usure, déformation plastique, etc.)

On procède à un contrôle des pièces régulièrement par prélèvement. Lorsque les cotes de la pièce atteignent un seuil défini de dégradation, on procède à une restauration de l'outillage ou à la fabrication d'un nouvel outillage. Les pièces obtenues avec les nouvelles matrices ou les matrices restaurées peuvent nécessiter plusieurs passes de finition séparées par des mesures afin qu'elles soient rigoureusement identiques aux pièces obtenues avec la première matrice. Cette similitude de résultat est particulièrement importante dans le cas des jeux d'aubes équipant un étage de rotor de turboréacteur.

Le problème à résoudre est de réduire le coût de la finition et d'obtenir des pièces rigoureusement identiques bien qu'elles aient été forgées avec des matrices différentes. Il est aussi d'éviter la mise au rebut de pièces parce que ne satisfaisant pas aux spécifications, ce qui dans le cas du forgeage de précision est un critère important de la validation du procédé.

Conformément à l'invention on parvient à résoudre ce problème avec un procédé de fabrication de pièces par forgeage de précision selon la revendication 1.

Avantageusement les pièces subissent un traitement de finition directement après le forgeage le traitement comprenant un polissage mécanique.

En particulier lorsque les pièces sont en titane, le traitement de finition comprend une combinaison de polissage mécanique et d'usinage chimique.

L'usinage chimique consiste en une dissolution chimique des alliages de titane. L'enlèvement de matière est conditionné par le temps d'immersion des pièces

Le procédé de l'invention est remarquable en ce que :
a) La première matrice est en particulier mise au point pour que la pièce brute de forge ait une surépaisseur susceptible d'être enlevée par une opération mécanique de polissage et/ou d'usinage chimique en une seule passe ou pour le moins sans qu'il soit nécessaire de procéder à des retouches manuelles significatives.
b) Lorsque la première matrice est au point, on réalise une acquisition numérique de la position d'un nombre déterminé de points sur la surface de l'empreinte et on crée un modèle numérique de ladite surface.
c) La fabrication de nouvelles matrices de remplacement comporte un usinage de finition de telle sorte que le modèle numérique de leur empreinte soit identique au modèle numérique de l'empreinte de la première matrice.

De préférence, on procède à un polissage automatisé au moyen de bandes abrasives. Avantageusement, on utilise une machine présentant un système de roue de contact entraînant une bande abrasive. Ce type de machine présente l'avantage de permettre le pilotage de la valeur d'enlèvement et de l'état de surface désirée, à partir de paramètres machines simples tels que la force exercée par la roue de contact sur la pièce, la vitesse de défilement de la bande sur la roue de contact ainsi que la vitesse relative de déplacement de la roue par rapport à la pièce à traiter.

Ce procédé permet de maîtriser la surépaisseur enlevée et de diminuer considérablement le nombre d'étapes successives de finition après forgeage. On assure aussi bien la géométrie de la pièce que son état de surface final avec un minimum de retouches manuelles et le cas échéant sans aucune retouche.

D'autres caractéristiques et avantages ressortiront de la description qui suit du procédé de l'invention en référence aux figures sur lesquelles
la figure 1 représente une matrice,
la figure 2 une coquille de refoulage,
la figure 3 une machine de polissage à bande.

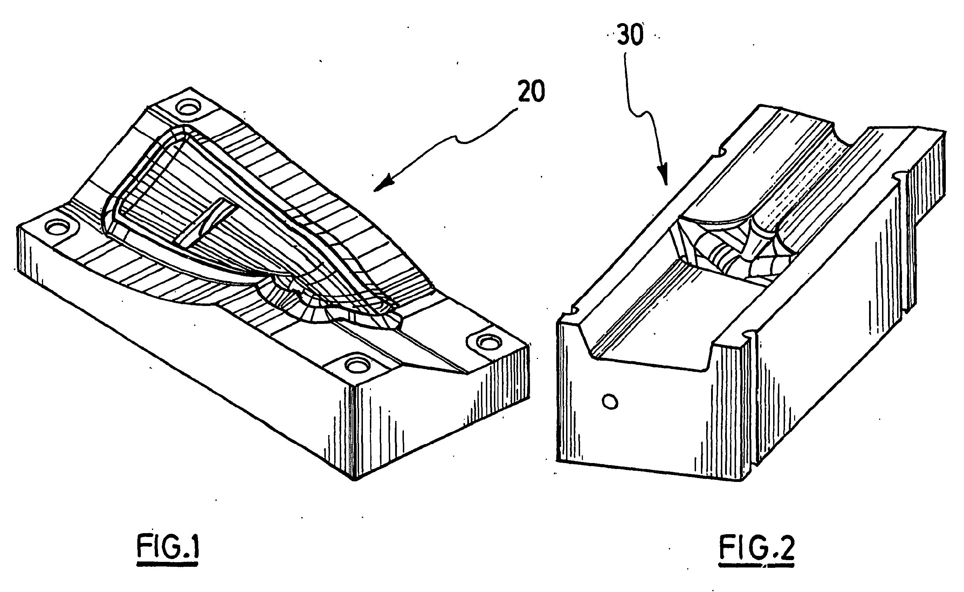

Comme on peut le voir sur les figures 1 et 2, les outillages entrant dans le procédé de forgeage de l'invention, qu'il s'agisse d'une matrice 20 de forgeage d'aube ou d'une coquille 30 de refoulage, sont de forme complexe avec à la fois des zones :
gauches et vrillées à forte courbure,
à très faible courbure,
profondes et étroites - par exemple une profondeur de 100 mm avec une largeur au fond de 20 mm,
composées de plans, de cylindres, des cônes et des congés de raccordement entre les portions de surface,
et des variations importantes d'altitude entre les deux côtés de l'outillage.

La matrice se dégrade progressivement par usure de l'empreinte notamment et par déformation plastique. Lorsque le degré de dégradation atteint un seuil que l'on a préétabli, et que l'on estime nécessaire le renouvellement de l'outillage, on procède à sa restauration ou bien à la construction d'un outillage nouveau à partir des informations que l'on a sauvegardées sur l'outillage préalablement mis au point. On assure ainsi la continuité du procédé.

Après avoir mis au point un premier outillage aux cotes définitives, on procède à la réalisation d'un modèle numérique de cet outil. Les moyens de mise en oeuvre de ce modèle numérique de la surface de l'outillage, sont en soi connus et disponibles sur le marché.

Les plus utilisés dans l'industrie sont les capteurs à contact que l'on trouve sur les machines à mesurer tridimensionnelle (MMT). Du fait de la forme sphérique de leur extrémité, ces capteurs donnent des résultats qui doivent faire l'objet d'un calcul de correction de rayon.

Parmi les capteurs sans contact, les plus courants sont ceux basés sur des techniques optiques avec une ou plusieurs sources laser ou des techniques optiques sans laser. Ils utilisent tous deux le principe de mesure basé sur la trigonométrie et plus particulièrement sur la triangulation.

Dans le cas d'une technique avec des sources laser, la pièce est éclairée par une source cohérente de lumière- un faisceau laser en général- et une ou plusieurs caméras de type CCD (Charged coupled device) observent la scène sous un angle généralement différent de celui de l'émission. Après une phase de calibration des caméras, les coordonnées des points de l'objet sont déduites de celles de son image sur la matrice CCD de la caméra.

Dans le cas d'une technique sans laser, le principe repose sur la projection sur la pièce d'une grille régulière , un réseau de franges, puis par calcul des coordonnées des points de la surface de l'objet par triangulation.

Une fois le capteur choisi, il faut définir la stratégie de digitalisation 3D qui consiste à
trouver une ou plusieurs positions du ou des capteurs qui permettent la réalisation du modèle numérique de toutes les surfaces de la pièce auxquelles on souhaite accéder,
choisir une densité du nuage de points suivant le travail qui est à effectuer ensuite, à partir de ce résultat tel un prototypage rapide, une reconstruction de surfaces ou une visualisation.

Pour l'ensemble des outillages de forges, on requiert par exemple une précision sur l'acquisition de l'ordre de 0,02 mm.

Le cas échéant en fonction de la complexité de la géométrie de certaines portions de la surface, on procède à une étape de reconstitution de la géométrie de la surface. Cette opération peut être réalisée par des moyens informatiques connus de l'homme du métier.

On récupère d'abord le nuage de points obtenu par numérisation. En fonction de la qualité de ce nuage de points il peut être nécessaire de lui appliquer une filtre dont l'objectif est d'atténuer les multiples petites variations locales, en supprimant les points aberrants, les erreurs de mesure, etc.

On procède à la reconstruction à partir de ce nuage traité :
Pour les zones de référence (plans, cylindres, sphères) on procède à une reconstruction automatique de forme.
Sinon on reconstruit une surface qui passe « au mieux » par une sélection de points délimitée par ses frontières. Celles-ci peuvent être les frontières d'éléments déjà reconstruits, des courbes tracées sur le nuage de points, des éléments théoriques. A la fin de la reconstruction de chaque carreau, le logiciel permet une analyse sur la surface reconstruite (écart maximum, distance maximale entre les frontières de deux carreaux adjacents ..). Cette analyse permet à l'opérateur de modifier les paramètres de reconstruction (paramètres de définition mathématique, tension de la surface, courbure aux limites..)

Lorsque le modèle numérique est réalisé, il est mis en mémoire sous un format de fichier CAO pour être importé dans l'environnement de FAO afin de générer la stratégie de fabrication puis un programme numérique sur une machine d'usinage, par exemple du type à grande vitesse UGV.

Ce programme est utilisé ensuite pour la fabrication de nouveaux outillages, matrices, afin qu'ils soient rigoureusement identiques à l'outillage parfait initial.

Dans le cas d'outillage « relavé » ou neuf, une vérification est effectuée par comparaison entre le modèle CAO de l'outillage parfait et le nuage de points issu de la numérisation de l'outillage fabriqué.

On décrit ci-après un procédé de finition après forgeage par abrasion au moyen d'une machine à polir de type à six axes.

On procède au contrôle géométrique de la pièce par une technique de type multicote et on rééquilibre les épaisseurs et les formes géométriques sur l'ensemble de la pale par combinaison de masquage des points faibles à l'aide d'un ruban adhésif et usinage chimique.

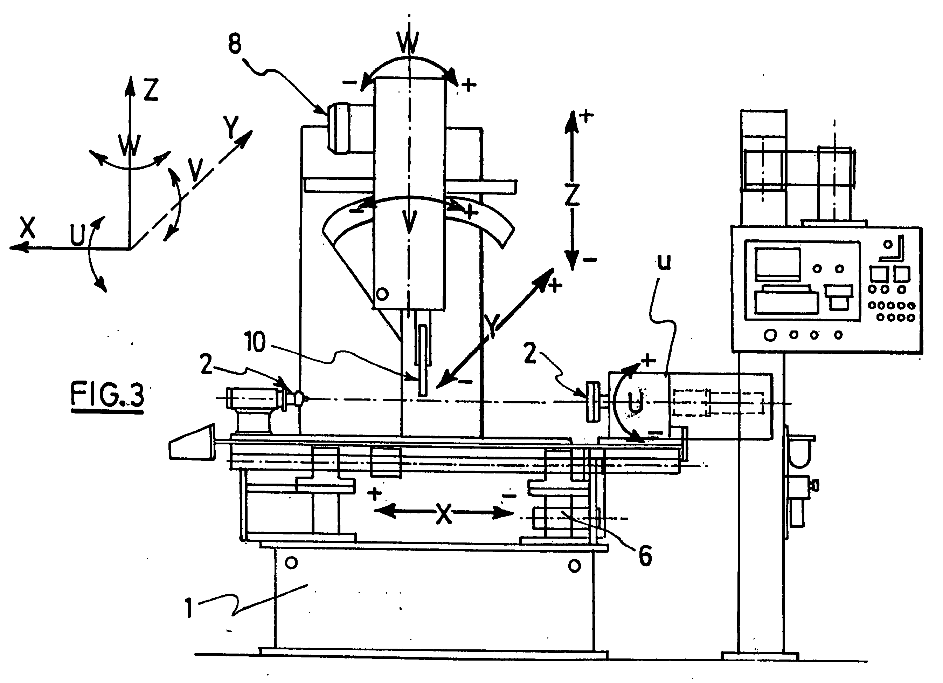

On enlève ensuite la sur-épaisseur de matière et on assure l'état de surface final de la pale, demandée au plan de définition, par polissage robotisé sur des machines à polir six axes. On décrit ci-après le procédé en rapport avec la figure 3 montrant une machine du commerce de type à six axes.

La machine comprend un bâti 1 avec un support de pièce 2, une aube de compresseur par exemple qui est maintenue horizontale le long de son axe principal, au moyen d'un dispositif de bridage mécanique ou hydraulique. Un premier moteur 4 assure la position en rotation (axe de rotation U) de la pièce autour de son axe principal. Un second moteur 6 assure le déplacement du support de la pièce selon un axe de translation (x). Un troisième moteur 8 entraîne la bande abrasive montée sur une roue de contact 10 et tendue par un système de galets.

L'axe de rotation de la roue 10 est en outre positionné en translation suivant les deux axes (y et z) perpendiculaires au premier axe x et en rotation selon leurs deux axes de rotation V et W associés.

On maintient ainsi à chaque instant la surface de contact de la roue en position tangentielle par rapport à la surface de la pièce.

Selon un exemple de réalisation, on utilise une roue de largeur de 25 mm avec un diamètre extérieur de 120 mm. En surface, on a ménagé des rainures sur un revêtement suffisamment rigide ; par exemple sa dureté est de 65 shore.

On procède au polissage en déplaçant la pièce le long de l'axe x et en la tournant autour de son axe. La roue est maintenue à chaque instant en contact tangentiel avec la surface de la pièce. On appuie la roue avec une pression déterminée par la pression exercée par un vérin, une vitesse de bande déterminée afin d'enlever une quantité de matière maîtrisée compte tenu de l'avance de la pièce par rapport à la roue.

Une fois la pièce sortie de la machine à polir, elle est directement prête pour l'usinage du pied et le cas échéant de la nageoire avec une pale conforme aussi bien en géométrie qu'en état de surface.

## Revendications

1. Procédé de fabrication de pièces par forgeage de précision comprenant
la fabrication et la mise au point d'un premier outillage de forgeage (20, 30),
le forgeage des pièces avec cet outillage, les pièces comprenant une surépaisseur déterminée, et
leur traitement de finition,
**caractérisé par le fait qu'**il comprend également
la réalisation d'un modèle numérique de la surface du premier outillage (20, 30) après mise au point, par acquisition numérique de la position d'un nombre déterminé de points sur la surface de cet outillage,
le forgeage de pièces et
la restauration de l'outillage ou la fabrication d'un nouvel outillage (20, 30) à partir du modèle numérique après le forgeage d'un nombre déterminé de pièces.

2. Procédé selon la revendication 1 selon lequel les pièces subissent un traitement de finition directement après le forgeage le traitement comprenant un polissage mécanique.

3. Procédé selon la revendication 1 selon lequel le traitement de finition comprend également un usinage chimique.

4. Procédé selon la revendication 1 dans lequel on procède à un contrôle des pièces forgées pour déterminer à quel moment on doit restaurer ou fabriquer un nouvel outillage (20 , 30).

5. Procédé selon l'une des revendications précédentes dans lequel la mise au point des outillages fabriqués (20, 30) comprend
a. l'acquisition numérique de la position d'un nombre déterminé de points sur la surface des outillages fabriqués ,
b. la comparaison de la position des points avec le modèle numérique, et
c. la correction éventuelle de la surface des outillages.

6. Procédé selon la revendication 5 selon lequel on procède à l'acquisition des points de la surface par mesure optique sans contact.

7. Procédé selon la revendication 5 selon lequel on procède à l'acquisition numérique des point par des moyens mécaniques.

8. Procédé selon l'une des revendications 1 à 7 et que l'on élimine ensuite la dite surépaisseur des pièces par abrasion.

9. Procédé selon la revendication précédente dans lequel l'abrasion est réalisée au moyen d'une bande montée sur une roue que l'on appuie sur la surface en surépaisseur.

10. Procédé selon la revendication précédente dans lequel on détermine la quantité de matière à éliminer en choisissant les paramètres machines : pression de la roue sur la surface, vitesse d'avancement de la bande et vitesse de déplacement de la roue.

## Claims

1. A precision-forging parts manufacturing process including
the manufacture and development of a first forging tooling equipment (20,30),
the forging of the parts with said tooling equipment, whereas the parts have a determined excessive thickness, and
their finishing treatment,
**characterised in that** it also includes
the realisation of a digital model of the surface of the first tooling equipment (20, 30) after adjustment, by digital acquisition of the position of a determined number of points on the surface of this tooling equipment,
the forging of parts,
the rehabilitation of the tooling equipment or the manufacture of new tooling equipment (20, 30) from the digital model, after forging a determined number of parts.

2. A method according to claim 1 wherein the parts are subjected to a finishing treatment directly after forging, said treatment including mechanic polishing.

3. A method according to claim 1 wherein the finishing treatment also comprises chemical machining.

4. A method according to claim 1, wherein the forged parts are controlled to determine at what time new tooling equipment (20, 30) should be rehabilitated or manufactured.

5. A method according to one of the previous claims wherein the adjustment of the tooling equipment manufactured (20, 30) includes
a. digital acquisition of the position of a determined number of points on the surface of the tooling equipment manufactured,
b. the comparison of the position of the points with the digital model, and
c. possible correction of the surface of the tooling equipment.

6. A method according to claim 5, wherein the points of the surface are acquired by contact free optical measurement.

7. A method according to claim 5, wherein the points are acquired digitally using mechanical means.

8. A method according to one of the claims 1 to 7, followed by elimination of said excessive thickness of the parts by abrasion.

9. A method according to the previous claim wherein abrasion is performed using a belt mounted on a wheel which is pressed against the surface of excessive thickness.

10. A method according to the previous claim wherein the quantity of matter to be eliminated is determined by selecting the machine parameters; pressure of the wheel against the surface, forward speed of the belt and displacement velocity of the wheel.

## Patentansprüche

1. Verfahren zur Herstellung von Teilen durch Präzisionsschmieden, das Folgendes umfasst:
die Herstellung und Einstellung einer ersten Schmiedewerkzeugausrüstung (20, 30),
das Schmieden von Teilen mit dieser Werkzeugausrüstung, wobei die Teile eine bestimmte Überdicke aufweisen, und
ihre Endbearbeitung,
**dadurch gekennzeichnet, dass** es des Weiteren Folgendes umfasst:
die Herstellung eines numerischen Modells der Oberfläche der ersten Werkzeugausrüstung (20, 30) nach der Einstellung durch numerische Erfassung der Position einer bestimmten Anzahl von Punkten auf der Oberfläche dieser Werkzeugausrüstung,
das Schmieden der Teile und
das Instandsetzen der Werkzeugausrüstung oder die Herstellung einer neuen Werkzeugausrüstung (20, 30) anhand des numerischen Modells nach dem Schmieden einer bestimmten Anzahl von Teilen.

2. Verfahren nach Anspruch 1, bei dem die Teile nach dem Schmieden eine direkte Endbearbeitung erfahren, wobei die Bearbeitung ein mechanisches Polieren umfasst.

3. Verfahren nach Anspruch 1, bei dem Endbearbeitung des Weiteren eine chemische Bearbeitung umfasst.

4. Verfahren nach Anspruch 1, bei dem die geschmiedeten Teile kontrolliert werden, um zu bestimmen, zu welchem Zeitpunkt eine Werkzeugausrüstung (20, 30) instand gesetzt oder neu hergestellt werden muss.

5. Verfahren nach einem der vorhergehenden Ansprüche, bei dem die Einstellung der hergestellten Werkzeugausrüstungen (20, 30) Folgendes umfasst:
a. das numerische Erfassen der Position mehrerer bestimmter Punkte auf der Oberfläche der hergestellten Werkzeugausrüstung,
b. den Vergleich der Position der Punkte mit dem numerischen Modell und
c. die etwaige Korrektur der Oberfläche der Werkzeugausrüstung.

6. Verfahren nach Anspruch 5, bei dem die Punkte der Oberfläche durch kontaktlose optische Messung erfasst werden.

7. Verfahren nach Anspruch 5, bei dem die Punkte durch mechanische Mittel erfasst werden.

8. Verfahren nach einem der Ansprüche 1 bis 7, bei dem danach die Überdicke der Teile durch Abschleifen beseitigt wird.

9. Verfahren nach dem vorhergehenden Anspruch, bei dem das Abschleifen mittels eines an einer Scheibe montierten Bands erfolgt, das gegen die die Überdicke aufweisende Fläche gedrückt wird.

10. Verfahren nach dem vorhergehenden Anspruch, bei dem die zu beseitigende Materialmenge durch Auswahl der Maschinenparameter bestimmt wird: Druck der Scheibe an die Oberfläche, Vorschubgeschwindigkeit des Bands und Verschiebungsgeschwindigkeit der Scheibe.
